# EUROPEAN PATENT APPLICATION

(11) **EP 2 099 213 A1**
(43) Date of publication of application: **09.09.2009**
(21) Application number: 07830872.3
(22) Date of filing: 30.10.2007
(51) Int. Cl.: H04N 5/232, H04N 5/225, H04N 5/228

(54) **MOVING IMAGE PICKUP APPARATUS WITH ZOOMING FUNCTION, IMAGE PROCESSING, DISPLAYING METHOD AND PROGRAM**

(30) Priority: 28.11.2006 JP 2006319506
(71) Applicant: NEC Corporation, Minato-ku Tokyo 108-8001 (JP)
(72) Inventor: KAKEHI, Sakiko, Tokyo 108-8001 (JP)
(74) Representative: Vossius & Partner
(86) International application number: PCT/JP2007/071138
(87) International publication number: WO 2008/065843

(57) **Abstract**

The present invention provides a moving picture imaging apparatus with a zoom function, a moving picture image processing and display method, and a program for implementing, at a low cost, image display in which the user does not perceive an abnormal image. During the abnormal image ejection period, camera output data is set to all "0" to thereby output the data as black image data via the camera data buffer 13 to the moving picture processing unit 15 and the display data buffer 16. The black screen inputted to the moving picture processing unit 15 is encoded. The image data inputted to the display data buffer 16 is not outputted to the display unit 14 during the abnormal frame transmission period; after the normal image is restored, data retained in the display data buffer is continuously transferred at a high speed to the display unit 14 to be overwritten on the latest data, to thereby draw images in which the user does not perceive the abnormal image.

## Description

### TECHNICAL FIELD

The present invention relates to a moving picture imaging apparatus with a zoom function, a moving picture image processing and display method, and a program, and in particular, to a processing technique to process, in an imaging apparatus with a zoom function mounted thereon, an abnormal image occurring in zoom change processing.

### RELATED ART

Recently, portable communication terminals including a camera function such as a CCD camera have been broadly employed. Some of them include not only an optical zoom function but also a digital zoom function (for example, Patent Document 1).

In this connection, when digital zoom is changed during moving picture shooting operation, an abnormal image occurs for a certain period during zoom changing. For such zoom change processing during the moving picture shooting operation, there is disposed a large-capacity buffer to keep a plurality of frames of several seconds to execute processing in which when an abnormal image occurs, the abnormal image is skipped to reduce the number of images to be displayed per second to thereby not display the abnormal image.

Patent Document 1: Japanese Patent Laid-Open Publication No. 2006-157191

### DISCLOSURE OF THE INVENTION

### PROBLEM TO BE SOLVED BY THE INVENTION

However, in the conventional technique described above, since a large-capacity buffer capable of storing a plurality of frames of image data is required, it is difficult to implement this at a low cost.

In this situation, the present invention is devised in consideration of the problem above and is to provide a moving picture imaging apparatus with a zoom function, a moving picture image processing and display method, and a program for implementing, at a low cost, image display in which the user does not perceive an abnormal image.

### MEANS FOR SOLVING THE PROBLEM

An exemplary aspect of the present invention is a first moving picture imaging apparatus with a zoom function including display control means for displaying, when an image abnormality occurs due to zoom change processing, image data of a frame immediately before occurrence of the abnormality until the image abnormality is restored.

An exemplary aspect of the present invention is a second moving picture imaging apparatus with a zoom function of the first moving picture imaging apparatus with a zoom function of the present invention, wherein the display control means displays, from when the zoom change processing is started to when the zoom change processing is terminated, image data of a frame outputted from a camera before the zoom change processing is started.

An exemplary aspect of the present invention is a third moving picture imaging apparatus with a zoom function of the second moving picture imaging apparatus of the present invention including substitute image creation means for creating, from when the zoom change processing is started to when the zoom change processing is terminated, substitute image data to substitute for image data outputted from the camera.

An exemplary aspect of the present invention is a fourth moving picture imaging apparatus with a zoom function of the third moving picture imaging apparatus with a zoom function of the present invention including image processing means for conducting image processing for image data outputted from the camera or the substitute image data.

An exemplary aspect of the present invention is a fifth moving picture imaging apparatus with a zoom function of the fourth moving picture imaging apparatus with a zoom function of the present invention, wherein image data outputted from the camera at occurrence of the image abnormality or from when the zoom change processing is started to when the zoom change processing is terminated or the substitute image data is data of a black image in which a data value is zero or data of a white image in which a data value is one.

An exemplary aspect of the present invention is a first moving picture image processing and display method in zoom change processing including, when an image abnormality occurs due to zoom change processing, image of a frame immediately before occurrence of the abnormality until the image is restored.

An exemplary aspect of the present invention is a second moving picture image processing and display method of the first moving picture image processing and display method of the present invention including displaying, from when the zoom change processing is started to when the zoom change processing is terminated, image data of a frame outputted from a camera before the zoom change processing is started, and executing image processing for image data outputted from the camera.

An exemplary aspect of the present invention is a third moving picture image processing and display method of the first moving picture image processing and display method of the present invention including creating, from when the zoom change processing is started to when the zoom change processing is terminated, substitute image data to substitute for image data outputted from the camera; displaying, from when the zoom change processing is started to when the zoom change processing is terminated, image data of a frame outputted from a camera before the zoom change processing is started; and executing image processing for the substitute image data from when the zoom change processing is started to when the zoom change processing is terminated.

An exemplary aspect of the present invention is a fourth moving picture image processing and display method of the second moving picture image processing and display method of the present invention, wherein image data outputted from the camera at occurrence of the image abnormality or from when the zoom change processing is started to when the zoom change processing is terminated is data of a black image in which a data value is zero or data of a white image in which a data value is one.

An exemplary aspect of the present invention is a fifth moving picture image processing and display method of the third moving picture image processing and display method of the present invention, wherein the substitute image data outputted from the camera at occurrence of the image abnormality or from when the zoom change processing is started to when the zoom change processing is terminated is data of a black image in which a data value is zero or data of a white image in which a data value is one.

An exemplary aspect of the present invention is a first program of the present invention is a program for moving picture image processing and display processing in zoom change processing, making an information processing apparatus execute processing for displaying, when an image abnormality occurs due to zoom change processing, image of a frame immediately before occurrence of the abnormality until the image is restored.

An exemplary aspect of the present invention is a second program of the first program of the present invention, making an information processing apparatus execute processing for displaying, from when the zoom change processing is started to when the zoom change processing is terminated, image data of a frame outputted from a camera before the zoom change processing is started; and processing for executing image processing for image data outputted from the camera.

An exemplary aspect of the present invention is a third program of the first program of the present invention, making an information processing apparatus execute processing for creating, from when the zoom change processing is started to when the zoom change processing is terminated, substitute image data to substitute for image data outputted from the camera; processing for displaying, from when the zoom change processing is started to when the zoom change processing is terminated, image data of a frame outputted from a camera before the zoom change processing is started; and processing for executing image processing for the substitute image data from when the zoom change processing is started to when the zoom change processing is terminated.

An exemplary aspect of the present invention is a fourth program of the second program of the present invention, wherein image data outputted from the camera at occurrence of the image abnormality or from when the zoom change processing is started to when the zoom change processing is terminated is data of a black image in which a data value is zero or data of a white image in which a data value is one.

An exemplary aspect of the present invention is a fifth program of the third program of the present invention, wherein the substitute image data outputted from the camera at occurrence of the image abnormality or from when the zoom change processing is started to when the zoom change processing is terminated is data of a black image in which a data value is zero or data of a white image in which a data value is one.

That is, the present invention is **characterized in that** in an operation to shoot a moving picture by an imaging apparatus, for example, in a zoom change operation using such as digital zoom, when several frames of abnormal images are ejected from the camera during zoom changing, respective processing is executed for display data and for video encode data.

When an abnormal image is ejected, data update is not conducted in the display unit and the display is stopped at the normal image before the abnormal image to thereby not display the abnormal image on the display unit. During the abnormal image ejection period, if the camera output data is set to all "0", the data is delivered as black image data via the camera data buffer to the moving picture processing unit and the display data buffer. The image data of the black picture inputted to the moving picture processing unit is encoded. The image data of the black picture inputted to the display data buffer is not fed to the display unit during the abnormal frame transmission period; after the normal image is restored, data stored in the display data buffer is continuously transferred at a high speed to the display unit to be overwritten on the latest data, to thereby draw images in which the user does not perceive the abnormal image.

As above, in accordance with the present invention, there is provided a technique which prevents the user from perceiving the abnormal image ejected at zoom change during the shooting operation.

### ADVANTAGES OF THE INVENTION

As described above, in the present invention, there are obtained advantages as described below.

According to a first advantage, in a camera which cannot prevent occurrence of abnormal pictures at zoom change during the moving picture shooting, abnormal image data is replaced by black screen data to create video data not including any abnormal picture and the display unit simultaneously suspends the image update during the zoom change processing period to display only normal image data; without providing any hardware, the video record data and the display data can be processed without reflecting therein the abnormal data at zoom change; as a result, the user does not perceive the abnormal image.

According to a second advantage, since a processing circuit to interpolate the abnormal image is not required and it is not necessary to dispose a large-capacity buffer; hence, the system can be constructed at a low cost.

### BEST MODE FOR CARRYING OUT THE INVENTION

Description will be given of an exemplary embodiment of the present invention.

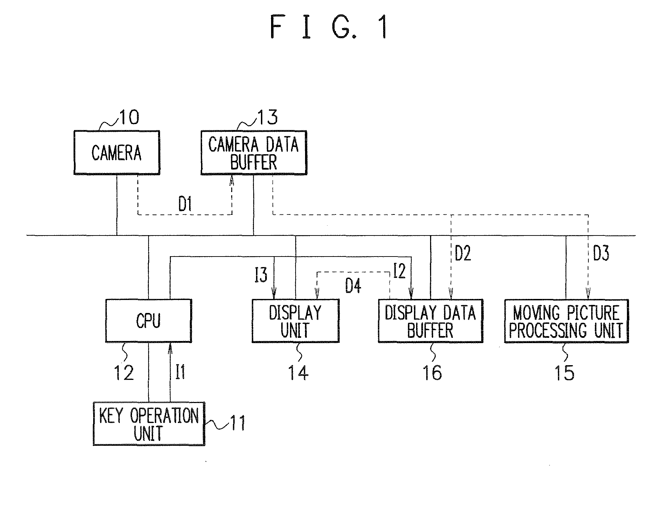

FIG. 1 shows a main section of structure of a cellular as a portable terminal including a moving picture imaging apparatus with a zoom function in accordance with an exemplary embodiment of the present invention.

In FIG. 1, the cellular includes a camera unit 10 including an imaging element, a key operation unit 11 for the user to input zoom change processing at moving picture shooting, a CPU 12 to control respective units, a camera data buffer 13 to store image data therein, a display unit 14 to display an image shot, a moving picture processing unit 15 to execute encoding processing of image data sent from the camera data buffer 13 to produce video data, and display data buffer 16 to store therein image data to be displayed on the display unit 14.

Description will be given of data, control, and a flow in the configuration above.

Image data shot by the camera unit 10 is fed to the camera data buffer 13 (D1) to be temporarily kept therein. And the image data delivered from the camera data buffer 13 is inputted as display data to the display data buffer 16 to be temporarily retained therein (D2). Also, the image data fed from the camera data buffer 13 is inputted to the moving picture processing unit 15 (D3) and is subjected to encode processing in the moving picture processing unit 15. In this connection, the camera unit 10 outputs, at occurrence of an abnormal image, image data of a black image in which all data values are zero.

On the other hand, when zoom change processing is inputted from the key operation unit 11 (I1), the CPU 12 outputs to the data buffer 16 an instruction to suspend the data output from the display data buffer 16 to the display unit 14 (12). Further, it stops the data update in the display unit 14 (I3).

Next, description will be given of operation of the present invention configured as described above.

First, description will be given of operation of the processing of display image at zoom change during the video recording.

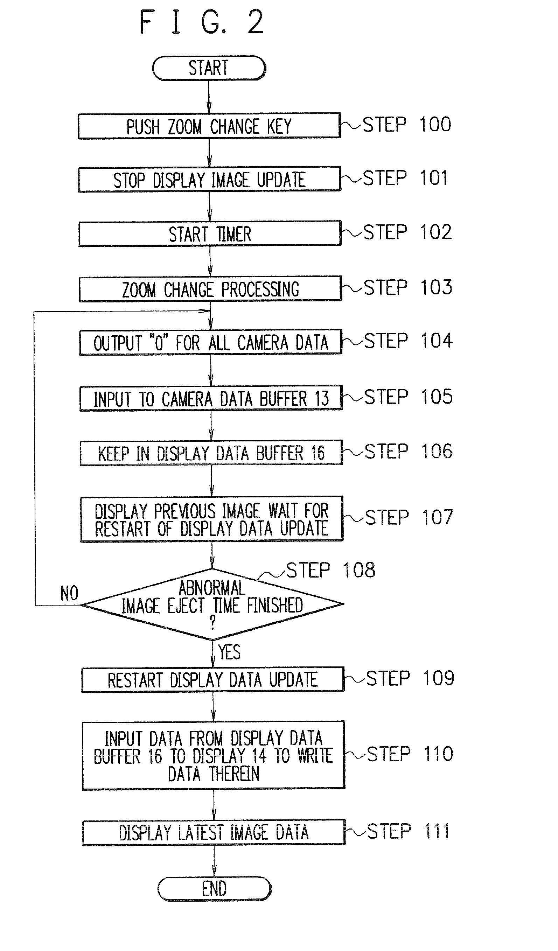

FIG. 2 is a flowchart of operation of processing for a display image in the zoom change processing during the video recording in a cellular in accordance with a first exemplary embodiment. Incidentally, in the following description, it is assumed that the abnormal image ejection period in the zoom change processing after the zoom change key is pushed in the moving picture shooting is beforehand measured and is hence known, and the time is beforehand stored in the timer operating under the CPU.

When the zoom change key is pushed during the moving picture shooting (step 100), the CPU 12 instructs the display unit 14 to stop the update of the display image (step 101). After the update is stopped, the timer to measure the period in which an abnormal image is outputted starts measurement (step 102).

The camera unit 10 executes zoom change processing in response to an instruction from the CPU 12 (step 103). The camera during the processing outputs image data of a black image in which the data value is "0" (step 104), and the data is inputted to the camera data buffer 13 (step 105).

The image data of the black image inputted to the camera data buffer 13 is outputted to the display data buffer 16 to be kept therein (step 106); the display image data is retained in the display data buffer 16 until the abnormal image ejection period is terminated; in the display unit 14, the image data is not updated and an image of the previous image data is displayed (step 107).

When the time measured by the timer indicates the abnormal image ejection time (step 108), the data update is restarted in the display unit 14 (step 109) and the latest image data retained in the display data buffer 16 is continuously transferred to overwrite the latest data (step 110). And the display unit 14 displays the image data transferred from the display data buffer 16 (step 111).

Subsequently, description will be given of operation of moving picture processing (video encoding) in the zoom change processing during the video recording.

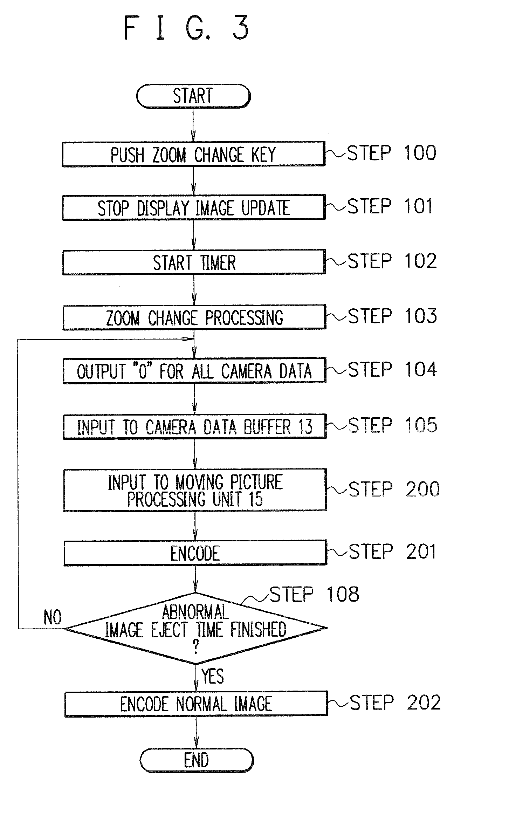

FIG. 3 is an operation flowchart of moving picture processing in the zoom change processing during the video recording in a cellular in accordance with the first exemplary embodiment. Incidentally, in the description below, the same processing as that of the display image in the zoom change processing during the video recording will be assigned with the same step number, and detailed description thereof will be skipped.

First, the operation from the pushing of the zoom change key during the moving picture shooting (step 100) to the inputting of image data of a black image in which the value of the image data is "0" to the camera data buffer 13 (step 105) is similar.

The image data of a black image inputted to the camera data buffer 13 is inputted to the moving picture processing unit 15 (step 200). And in the moving picture processing unit 15, the image data of the black image is subjected to video encoding processing (step 201).

Until the time measured by the timer indicates the abnormal image ejection time (step 108), the moving picture processing unit 15 executes the video encoding processing for the image data of the black image, and executes the video encoding processing for the normal image data after the abnormal image ejection period is terminated (step 202).

By executing the above processing, video data not including the abnormal image is created, and simultaneously, the display unit stops the image update during the zoom change processing period to display only the normal image data, to thereby prevent the user from perceiving the abnormal image.

Incidentally, in the exemplary embodiment described above, the detection of the start of zoom change processing is triggered by the depression of the zoom change key, which however is not limitative; it may also be possible that ejection of an abnormal image or ejection of image data of a black image is detected and the detection is adopted as the trigger of the processing start.

Additionally, in the exemplary embodiment described above, the end of the zoom change processing is detected by counting the number of frames, which however is not limitative; it is also possible that the end of ejection of an abnormal image or image data of a black image is detected and the detection is adopted as the trigger of the processing end.

Further, in the exemplary embodiment described above, there is employed image data of a black image in place of an abnormal image, which however is not limitative; it is also possible to use image data of a white image in which the data value is "1".

Next, description will be give of operation from the start of zoom change processing to the end thereof in accordance with the present invention by referring to a concrete example.

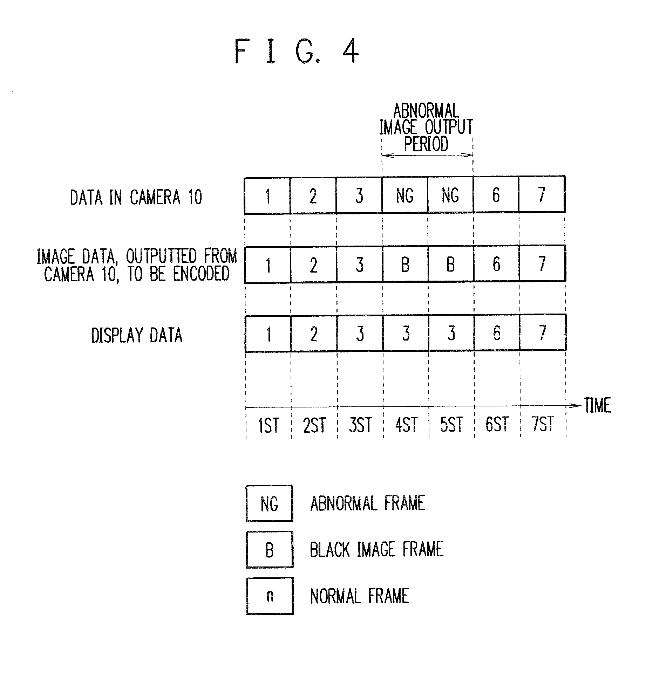

FIG. 4 is a diagram to explain processing during seven image frame periods before and after abnormal images and including the abnormal images during the zoom change processing. In the following description, the period for the zoom change processing is two frames beginning at depression of the zoom change key. In FIG. 4, "NG" indicates an abnormal frame, "B" is a black image frame, and "n (n is an integer) indicates a normal frame.

First, during the first, second, and third frame periods, the camera unit 10 outputs normal images. The normal images are encoded, and the normal images are also displayed on the display unit 14.

Here, after the camera unit 10 outputs the normal images, when zoom change processing is inputted from the key operation unit 11 in the fourth frame period, the timer starts measurement. On the other hand, since a period of two frames is required in the camera unit 10 for the zoom change processing, the data therein is an abnormal image during the fourth and fifth frame periods, and the camera unit 10 outputs image data of a black image in which the data value is "0".

In the moving picture processing unit 15, the image data of the black image outputted from the camera unit 10 is encoded during the fourth and fifth frame periods. On the other hand, in the display unit 14, the display data is stopped at the previous normal image of the third frame in response to an instruction from the CPU 12 during the fourth and fifth frame periods, and the output data from the camera data buffer 13 is retained in the display data buffer 16.

When two frames are counted through the timer measurement, the zoom change processing is terminated; during the sixth and seventh frame periods, the camera unit 10 outputs image data of normal images.

During the sixth frame period in which normal image data is outputted, the display unit 14 restarts data update and conducts an overwriting operation of the latest image data of the sixth frame retained in the display data buffer 16 to display an image of the image data of the sixth frame. On the other hand, the moving picture processing unit 15 encodes the normal image data of the sixth and seventh frames.

A second exemplary embodiment will be described.

The second exemplary embodiment is similar in its basic configuration to the first exemplary embodiment described above; however, in the camera unit 10, there is provided a device to cope with a case wherein the abnormal image cannot be replaced by the image data of a black image.

In the camera unit 10, when the abnormal image cannot be replaced by the image data of a black image, processing is executed for the image data which is outputted from the camera data buffer 13 and which is inputted to the moving picture processing unit 15, during the zoom change processing period, to convert the value of the image data into "0" to produce image data of a black image, and the image data of the black image is subjected to the moving picture processing. As for the conversion of the image data of the black image, it may be conducted by the moving picture processing unit 15, or a converting unit to conduct the conversion into the black image may be arranged as a stage preceding the moving picture processing unit 15. Moreover, the conversion processing may be executed by software or hardware.

Next, description will be given of operation in the second exemplary embodiment.

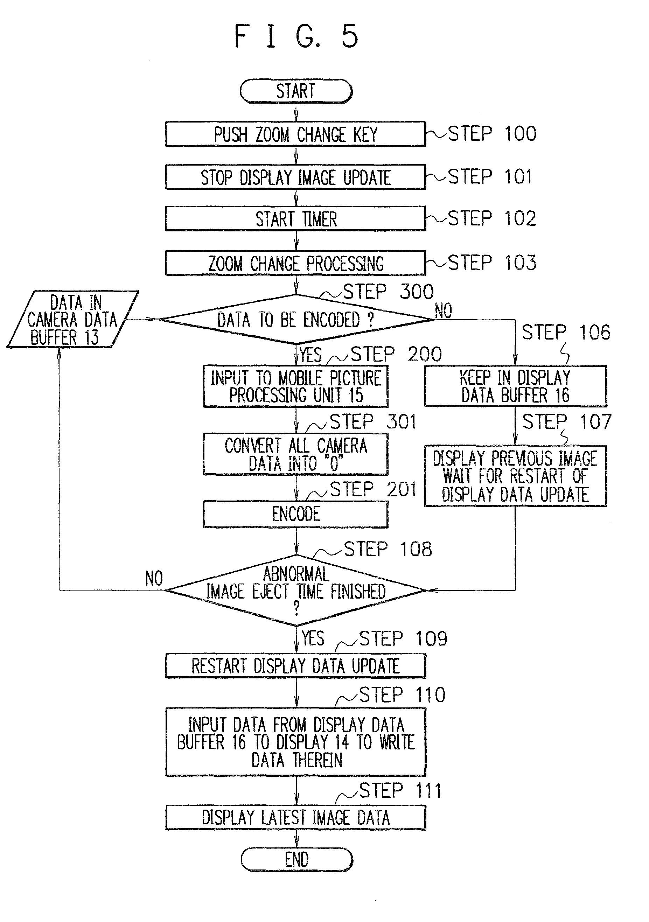

FIG. 5 is an operation flowchart of display image processing and moving picture processing at zoom change during the video recording in a cellular in accordance with the second exemplary embodiment. In the description below, the same processing as that of the first exemplary embodiment is assigned with the same step number, and detailed description thereof will be emitted.

First, the operation from the pushing of the zoom change key during the moving picture shooting (step 100) to the inputting of image data of a black image in which the value of the image data is "0" to the camera data buffer 13 (step 105) is similar.

In the zoom change processing, if the image data outputted from the camera data buffer 13 is encode data to be processed by the moving picture processing unit 15 (steps 300 and 200), the moving picture processing unit 15 converts the data value of the image data outputted from the camera data buffer 13 into zero (step 301) and then conducts the video encoding (step 201).

On the other hand, in the zoom change processing, if the image data outputted from the camera data buffer 13 is inputted to the display data buffer 16 (steps 300 and 106), the image data inputted to the camera data buffer 13 is outputted to the display data buffer 16 to be retained therein; until the abnormal image ejection period is terminated, the display image data is retained in the display data buffer 16; in the display unit 14, the image data is not updated and the previous image data is displayed (step 107).

When the time measured by the timer indicates the abnormal image ejection time (step 108), the data update is restarted in the display unit 14 (step 109) and the latest image data retained in the display data buffer 16 is continuously transferred to the display unit 14 to be overwritten on the latest data (step 110). And the display unit 14 displays the image data transferred from the display data buffer 16 (step 111).
As above, in accordance with the second exemplary embodiment, even if the abnormal screen cannot be replaced by image data of a black image in the camera unit, an advantage similar to that of the first exemplary embodiment can be attained.

As above, description has been given of exemplary embodiments of the present invention, but the present invention is not restricted by the exemplary embodiments, and the exemplary embodiments can be modified in various ways within the scope of the gist of the present invention.

For example, the control operation in the above exemplary embodiments may be carried out by hardware, software, or a composite configuration of both thereof. If the processing is executed by software, it is possible that a program having stored therein a processing sequence is installed in a memory of a computer incorporated in dedicated hardware and is executed or the program is installed in a general computer capable of executing various processings and is executed.

This program may be beforehand recorded in a hard disk or a Read Only Memory (ROM) as a recording medium. Alternatively, the program may be temporarily or permanently stored (recorded) in a removable recording medium such as a Floppy (registered trademark) disk, a Compact Disc Read Only Memory (CD-ROM), a Magnetooptical (MO) disk, a Digital Versatile Disc (DVD), a magnetic disk, or a semiconductor memory. Such removable recording medium may be provided as so-called package software. In this regard, it is possible that the program is installed in a computer from the removable recording medium described above; also, the program may be transferred by radio from a download site to a computer or is transferred by wire in a computer via a network such as a Local Area Network (LAN) or the internet, and the transferred program may be received by a computer to be installed in a recording medium such as a hard disk incorporated in the computer.

Furthermore, it is also possible to employ a configuration in which the processing is executed in a time-series fashion according to the processing operations described in conjunction with the above exemplary embodiments; and also in a configuration in which the processing is executed in a concurrent or individual fashion according to processing capacity of the apparatus which executes the processing or according to necessity.

Additionally, the media communication system which has been described for the above exemplary embodiments and which includes a transmission-side media communication apparatus and a reception-side media communication apparatus may be constructed in logical aggregation structure including a plurality of apparatuses or in mixed structure including functions of respective apparatuses.

This application is based upon and claims the benefit of priority from Japanese patent application No. 2006-319506, filed on November 28, 2006, the disclosure of which is incorporated herein in its entirety by reference.

### BRIEF DESCRIPTION OF DRAWINGS

[FIG. 1] FIG. 1 is a diagram showing a main section of structure of a cellular as a portable terminal including a moving picture imaging apparatus with a zoom function in accordance with an exemplary embodiment of the present invention.
[FIG. 2] FIG. 2 is a flowchart of operation of processing for a display image in the zoom change processing during the video recording in a cellular in accordance with a first exemplary embodiment.
[FIG. 3] FIG. 3 is an operation flowchart of moving picture processing in the zoom change processing during the video recording in a cellular in accordance with the first exemplary embodiment.
[FIG. 4] FIG. 4 is a diagram to explain processing during seven image frame periods before and after abnormal images and including the abnormal images during the zoom change processing.
[FIG. 5] FIG. 5 is an operation flowchart of display image processing and moving picture processing at zoom change during the video recording in a cellular in accordance with a second exemplary embodiment.

### DESCRIPTION OF REFERENCE NUMERALS

10 Camera unit
11 Key operation unit
12 CPU
13 Camera data buffer
14 Display unit
15 Moving picture processing unit
16 Display data buffer

## Claims

1. A moving picture imaging apparatus with a zoom function comprising
display control means for displaying, when an image abnormality occurs due to zoom change processing, image data of a frame immediately before occurrence of the abnormality until the image abnormality is restored.

2. The moving picture imaging apparatus with a zoom function in accordance with claim 1, wherein the display control means displays, from when the zoom change processing is started to when the zoom change processing is terminated, image data of a frame outputted from a camera before the zoom change processing is started.

3. The moving picture imaging apparatus with a zoom function in accordance with claim 2 comprising substitute image creation means for creating, from when the zoom change processing is started to when the zoom change processing is terminated, substitute image data to substitute for image data outputted from the camera.

4. The moving picture imaging apparatus with a zoom function in accordance with claim 3 comprising image processing means for conducting image processing for image data outputted from the camera or the substitute image data.

5. The moving picture imaging apparatus with a zoom function in accordance with claim 4, wherein image data outputted from the camera at occurrence of the image abnormality or from when the zoom change processing is started to when the zoom change processing is terminated or the substitute image data is data of a black image in which a data value is zero or data of a white image in which a data value is one.

6. A moving picture image processing and display method in zoom change processing including
displaying, when an image abnormality occurs due to zoom change processing, image of a frame immediately before occurrence of the abnormality until the image is restored.

7. The moving picture image processing and display method in accordance with claim 6, including:
displaying, from when the zoom change processing is started to when the zoom change processing is terminated, image data of a frame outputted from a camera before the zoom change processing is started; and
executing image processing for image data outputted from the camera.

8. The moving picture image processing and display method in accordance with claim 6, including:
creating, from when the zoom change processing is started to when the zoom change processing is terminated, substitute image data to substitute for image data outputted from the camera;
displaying, from when the zoom change processing is started to when the zoom change processing is terminated, image data of a frame outputted from a camera before the zoom change processing is started; and
executing image processing for the substitute image data from when the zoom change processing is started to when the zoom change processing is terminated.

9. The moving picture image processing and display method in accordance with claim 7, wherein image data outputted from the camera at occurrence of the image abnormality or from when the zoom change processing is started to when the zoom change processing is terminated is data of a black image in which a data value is zero or data of a white image in which a data value is one.

10. The moving picture image processing and display method in accordance with claim 8, wherein the substitute image data outputted from the camera at occurrence of the image abnormality or from when the zoom change processing is started to when the zoom change processing is terminated is data of a black image in which a data value is zero or data of a white image in which a data value is one.

11. A program for moving picture image processing and display processing in zoom change processing, making an information processing apparatus execute processing for displaying, when an image abnormality occurs due to zoom change processing, image of a frame immediately before occurrence of the abnormality until the image is restored.

12. The program for moving picture image processing and display processing in accordance with claim 11, making an information processing apparatus execute:
processing for displaying, from when the zoom change processing is started to when the zoom change processing is terminated, image data of a frame outputted from a camera before the zoom change processing is started; and
processing for executing image processing for image data outputted from the camera.

13. The program for moving picture image processing and display processing in accordance with claim 11, making an information processing apparatus execute:
processing for creating, from when the zoom change processing is started to when the zoom change processing is terminated, substitute image data to substitute for image data outputted from the camera;
processing for displaying, from when the zoom change processing is started to when the zoom change processing is terminated, image data of a frame outputted from a camera before the zoom change processing is started; and
processing for executing image processing for the substitute image data from when the zoom change processing is started to when the zoom change processing is terminated.

14. The program for moving picture image processing and display processing in accordance with claim 12, wherein image data outputted from the camera at occurrence of the image abnormality or from when the zoom change processing is started to when the zoom change processing is terminated is data of a black image in which a data value is zero or data of a white image in which a data value is one.

15. The program for moving picture image processing and display processing in accordance with claim 13, wherein the substitute image data outputted from the camera at occurrence of the image abnormality or from when the zoom change processing is started to when the zoom change processing is terminated is data of a black image in which a data value is zero or data of a white image in which a data value is one.
